# EUROPÄISCHE PATENTSCHRIFT

(11) **EP 0 756 773 B1**
(45) Veröffentlichungstag und Bekanntmachung des Hinweises auf die Patenterteilung: **12.08.1998**
(21) Anmeldenummer: 95915135.8
(22) Anmeldetag: 07.04.1995
(51) Int. Cl.: H02J 13/00

(54) **VERFAHREN UND SCHALTUNGSANORDNUNG ZUM ENERGIEARMEN ABFRAGEN VON BINÄREN ZUSTÄNDEN ÜBER LANGE LEITUNGEN**
PROCESS AND APPARATUS FOR THE LOW-ENERGY INTERROGATION OF BINARY STATES OVER LONG LINES
PROCEDE ET DISPOSITIF POUR L'INTERROGATION A FAIBLE ENERGIE DES ETATS BINAIRES DE GRANDES LIGNES

(30) Priorität: 19.04.1994 DE 4413467
(43) Veröffentlichungstag der Anmeldung: 05.02.1997
(73) Patentinhaber: SIEMENS AKTIENGESELLSCHAFT, 80333 München (DE)
(72) Erfinder: ZIRKL, Siegmar, D-93051 Regensburg (DE)
(86) Internationale Anmeldenummer: DE9500472
(87) Internationale Veröffentlichungsnummer: WO9528760

(56) Entgegenhaltungen:
- DE-A- 4 137 204
- DE-A- 4 142 254
- US-A- 4 103 299

## Beschreibung

Die Erfindung bezieht sich auf ein Verfahren zum energiearmen Abfragen von binären Zuständen über lange Leitungen mittels einer Überwachungsschaltung und Busankopplerschaltung an Busleitungen in Bussystemen zur Energie- und Informationsübertragung der Gebäudesystemtechnik, im einzelnen nach Gattungsbegriff von Patentanspruch 1. Die Erfindung bezieht sich weiter auf Schaltungsanordnungen zur Durchführung des Verfahrens. Es wird mit energiearmen Impulsen einer Polarität jeweils eine lange Leitung gegen Bezugspotential aufgeladen, solange ein angeschlossener Aktor bzw. Sensor hohe Spannung bzw. Offenzustand aufweist, wobei die Kapazität der langen Leitung über den Aktor bzw. Sensor entladen wird, wenn dieser niedrige Spannung bzw. Schließzustand aufweist. Durch einen Optokoppler zwischen der langen Leitung und einer Busankopplerschaltung erfolgt das Abfragen potentialfrei hinsichtlich der Busleitung. Eine derartige Leistungsüberwachung ist durch eine entsprechende Schaltungsanordnung bekannt (DE-A-4 142 254).

Wenn man Aktoren oder Sensoren mit binärem Ausgang oder mit einem Ausgang, der näherungsweise als binärer Ausgang wirkt, über lange Leitungen an ein Bussystem anzuschließen hat, ist die Kapazität der langen Leitung störend. Wenn man beispielsweise geschaltete Kontakte auf ihren Schaltzustand über lange Leitungen abzufragen hat, stehen an der Anwenderschnittstelle, AST, in einem Bussystem beispielsweise lediglich 10 mA bei 5 Volt Spannung zur Verfügung. Die Abfrage auf den Schaltungszustand des binären Ausgangs soll daher möglichst leistungsarm, um nicht zu sagen leistungslos, und ohne den Aufwand eines zusätzlichen üblichen Informationsübertragungssystems erfolgen.

Zur Überwachung von binären Ausgängen bzw. Eingängen bei Schaltkontakten, um Information über den Schaltzustand des Schaltkontaktes zu erhalten, ist es für einen Installationsbus der Gebäudesystemtechnik bekannt, eine leistungsarme Abfrage bei galvanischer Trennung zwischen Kontakt- und Binäreingabeglied einer Überwachungsschaltung durchzuführen (DE-A-4 142 254). Wenn energiearme Impulse über eine Leitung zur Abfrage eines Binärzustandes geschickt werden und infolge des Schließzustandes an einem Koppelglied einer Überwachungsschaltung wieder ankommen, werden die Stromimpulse in Spannungsimpulse umgeformt, von einem Speicher mit der Wirkung eines Flip-Flops eingelesen und in ein stetiges Ausgangssignal umgesetzt, das den zu überwachenden geschlossenen Kontakt mit einem Potentialwert abbildet und den geöffneten Kontakt mit einem niedrigeren Potentialwert abbildet.

Bei Überwachungssystemen, bei denen Impulse zu einem zu überwachenden Aktor bzw. Sensor laufen, treten mit zunehmender Leitungslänge infolge deren Kapazität zunehmend Schwierigkeiten auf. Gerade bei energiearmen kurzen Impulsen werden diese mit zunehmender Leitungslänge durch deren Kapazität kurzgeschlossen, so daß der Schaltungszustand des zu überwachenden Aktors bzw. Sensors nicht mehr zuverlässig angezeigt wird. Derartige zu überwachende Aktoren können beispielsweise Bewegungsmelder und Windmesser oder Dämmerungsmelder sein. Sensoren können Tür- und Fensterstellungen anzeigen oder als Glasbruchmelder dienen.

Wenn man daran denkt, eine energiearme Überwachung durch besonders kleine Ströme durchzuführen, so stößt man auf die Schwierigkeit, daß bei Strömen unter 1 mA auf längere Zeit gesehen Kontaktierungsprobleme auftreten, die mit der Anzahl der in Serie liegenden Kontakte zunehmen. Unter diesem Blickwinkel müßte man höhere Ströme einsetzen, die jedoch eine unzulässig hohe Stromentnahme aus dem Bussystem erfordern würden. Andererseits scheiden Treiber wegen der niedrigen verfügbaren Energie und des damit verbundenen erhöhten Aufwands aus wirtschaftlichen Gründen aus. Die gemessenen Leitungskapazitäten für lange an ein Bussystem anzuschließende Überwachungsleitungen liegen in der Größenordnung von 120 pF/m. Bei einer 100 m langen Leitung, wie sie bei Glasbruchsensoren leicht zustande kommt, erreicht die Leitung dann bereits eine Kapazität von 12000 pF bzw. 12 nF.

Der Erfindung liegt die Aufgabe zugrunde, ein Verfahren zum energiearmen Abfragen von binären Zuständen über lange Leitungen zu entwickeln, bei dem ein Abfragen des Schaltungszustands eines zu überwachenden Elements zuverlässig möglich ist.

Die Lösung der geschilderten Aufgabe erfolgt durch ein Verfahren nach Patentanspruch 1. Hierbei wird mit energiearmen Impulsen einer Polarität jeweils eine lange Leitung gegen Bezugspotential über eine Weichenschaltung aufgeladen, solange ein angeschlossener Aktor bzw. Sensor hohe Spannung bzw. Offenzustand aufweist. Eine bestimmte Spannung am Leitungseingang der Weichenschaltung verursacht eine Umschaltung der Spannung auf den Optokoppler, wodurch dieser aktiviert wird. Dieses Ereignis steht als Meldeereignis für Offenzustand der Leitung zur Verfügung. Bei Schließzustand und Spannungsabbau auf der langen Leitung wird dem Optokoppler mittels der Weichenschaltung die aktivierende Spannung entzogen, was als Meldeereignis für Schließzustand der langen Leitung zur Verfügung steht. Man vermeidet jedoch umlaufende Impulse, und die dem Bussystem entnommene Energie für energierarme Impulse wird wie bei einer Speicherschaltung zum Aufbauen eines Gleichspannungspotentials verwandt. So kann man beispielsweise Impulse einer Dauer von etwa 50 µs im Abstand von etwa 4 ms wiederholen. Die beispielsweise nach Anspruch 2 auf eine Spannung in der Größenordnung von 24 Volt erhöhten Impulse stellen Ströme über 1 mA über die lange Leitung und dem geschlossenen Kontakt 6 sicher.

In bewährter Weise wird bei der Abfrage eine Potentialtrennung zwischen den abzufragenden Aktoren bzw. Sensoren und dem Bussystem durch Optokoppler sichergestellt.

Die Schaltungsanordnung weist einen Impulsgenerator auf, der mit einer Weichenanordnung in Verbindung steht, die einmal über die lange Leitung zu einem anzuschließenden Aktor bzw. Sensor führt und zum anderen über einen Optokoppler, der auf seiner anderen Potentialseite zur Anwenderschnittstelle, AST, eines Busankopplers führt. Je nach Potentialstand der langen Leitung wird dann einmal von niedrigem Potential das Potential in der langen Leitung aufgebaut und bei hohem Potential bei einem offenen Kontakt von der Weichenanordnung aus ein Pfad über den Optokoppler hergestellt, so daß der Offenzustand besonders verlustarm über den Optokoppler angezeigt werden kann, indem dieser emittiert und seine andere Potentialseite leitend steuert. Hierbei ist es vorteilhaft, bei einer Schaltungsanordnung zur Durchführung des Verfahrens die Leitungskapazität in Verbindung mit einem Widerstand, beispielsweise in der Schaltungsanordnung, auf eine Zeitkonstante einzustellen, die im Vergleich zu Schaltverzögerungszeiten des Bus-systems klein, möglichst vernachlässigbar klein, ist.

Es ist besonders vorteilhaft, im Strompfad zwischen Impulsgenerator und langer Leitung Schaltmittel zur Impulsverrundung anzuordnen, um beim Aufbau des Gleichspannungspotentials in der langen Leitung keine Impulse mit steilen Flanken in die lange Leitung einlaufen zu lassen. Man vermeidet dadurch, daß die lange Leitung als Antenne wirken könnte und Störungen abstrahlt, die im Sinne der EMV-Vertraglichkeit zu vermeiden sind. Derartige Schaltungsmittel zur Impulsverrundung können im einfachsten Fall RC-gegliedert sein. Man kann auch Resonanzkreise mit einer Freilaufdiode zum Abschneiden der Rückschwingung bei der Impulserzeugung einsetzen. Dies ist besonders vorteilhaft auf der Sekundärseite eines Transformators zur Spannungsvervielfachung der vom Impulsgenerator auf der Primärseite erzeugten Impulse.

Ausführungsbeispiele der Erfindung sollen nun anhand der Zeichnung - grob schematisch wiedergegeben - näher erläutert werden: Es zeigt
FIG 1 eine Anordnung von Busleitung, Busankoppler, Überwachungsschaltung und langer Leitung zu einem auf seinen binären Zustand zu überwachenden Elements,
FIG 2 ein Ausführungsbeispiel für eine Überwachungsschaltung für vier zu überwachende Elemente, also Aktoren bzw. Sensoren.

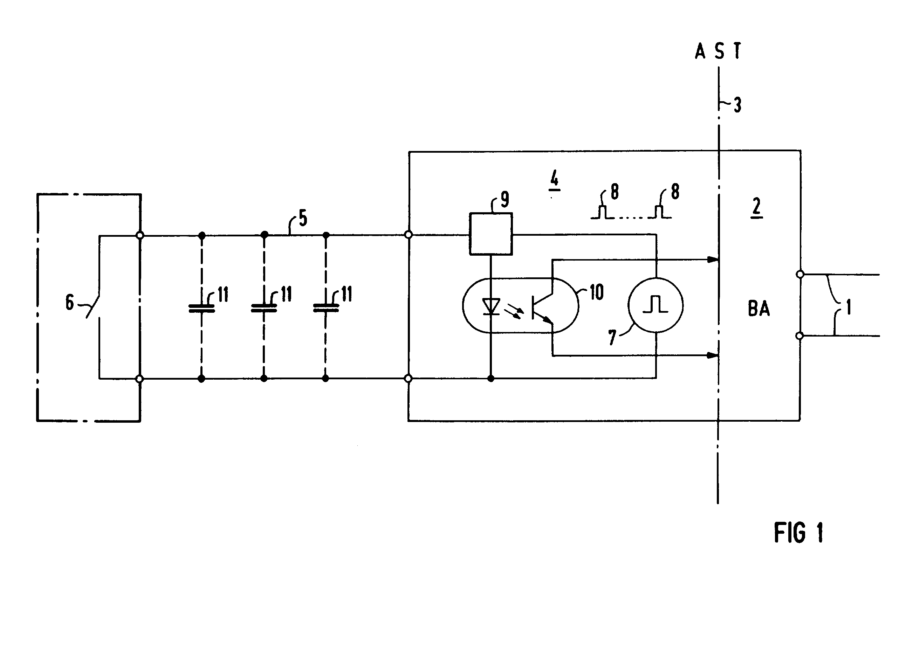

In der Anordnung nach FIG 1 führt eine Busleitung 1 aus zwei Leitern zu einer Busankopplerschaltung 2, wie sie beispielsweise beim Bussystem der European Installation Bus Association, EIBA (s. auch Siemens Druckschrift: instabus EIB, 11/92, Bestell-Nr. E20001-P311-A613-V1, S. 26-29), üblich ist. An der Anwenderschnittstelle 3, AST, ist eine Überwachungsschaltung 4 angeschlossen, die über eine lange Leitung 5 ein zu überwachendes Element 6 auf seinen Schaltungszustand überwacht. Das zu überwachende Element kann man sich als Schaltkontakt vorstellen, es kann jedoch ebenso gut ein gewöhnlicher Binäreingang sein, ein sogenannter Standard-Binäreingang. Wesentlich ist, daß das zu überwachende Element 6, also ein angeschlossener Aktor bzw. Sensor, dadurch auf seinen Schaltzustand überwacht wird, daß die lange Leitung 5 gegen Bezugspotential aufgeladen wird, solange ein angeschlossener Aktor bzw. Sensor hohe Spannung bzw. Offenzustand aufweist und das Absinken des Potentials infolge der Entladung des Leitungspotentials über einen Aktor bzw. Sensor bei dessen Schließzustand bzw. bei niedriger Spannung zum Erkennen des anderen Schaltzustandes verwendet wird. Die gesamte Vorsorgung für die Überwachungsschaltung und für die Abfrage des zu überwachenden Elements 6 ist aus der auf 10 mA bei 5 Volt begrenzten Spannungsquelle aus der Anwenderschnittstelle 3 aus dem Bussystem zu entnehmen.

Der Impulsgenerator 7 kann beispielsweise dafür ausgelegt sein, Impulse einer Dauer von etwa 50 µs in einem Abstand von 4 ms zu wiederholen. Bei offenem Schaltzustand des zu überwachenden Elements 6 wird mit den Impulsen 8 des Impulsgenerators 7 in der langen Leitung 5 ein Potential gegen Bezugspotential aufgebaut. Im Ausführungsbeispiel steht der Impulsgenerator 7 mit einer Weichenschaltung 9 in Verbindung, die einmal zur langen Leitung 5 eine Verbindung herstellt, solange bei Offenzustand des zu überwachenden Elements 6 das Potential auf der Leitung 5 aufgebaut wird, und die bei aufgebautem Potential eine Verbindung zum Optokoppler 10 herstellt. Der Optokoppler dient der Potentialtrennung zwischen langer Leitung 5 und Busleitung 1. Die Abfrage erfolgt dann hinsichtlich der Busleitung 1 potentialfrei. Das Ansprechen des Optokopplers 10 dient als Zeichen dafür, daß das zu überwachende Element 6 den Binärzustand "high" aufweist. Über die lange Leitung 5 erfolgt dann nahezu keinerlei Energietransport, wenn man von Leitungsverlusten absieht. Die Kapazität der Leitung 5 ist durch die Kapazitäten 11 veranschaulicht.

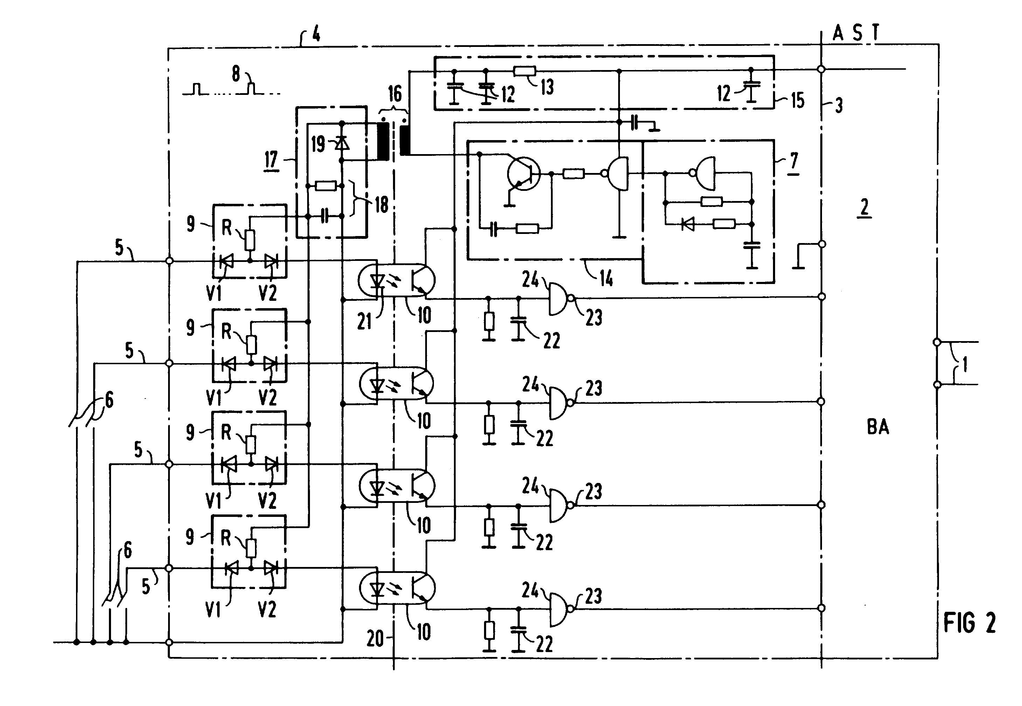

Die Überwachungsschaltung 4 nach FIG 2 bezieht Energie zur Impulserzeugung im Impulsgenerator 7 aus der Busankopplerschaltung 2. In Verbindung mit einer Verstärkerschaltung 14 und einer Filterschaltung 15 werden Impulse einer Spannungsvervielfacherschaltung 16, im Ausführungsbeispiel der Primärwicklung eines Transformators, zugeführt. Kondensatoren 12 und Widerstände 13 in der Filterschaltung 15 sind vorteilhaft auf eine Zeitkonstante RC von 20 ms abgestimmt bei Schaltvorgängen in der Größenordnung von 100 ms im Bussystem. Jedenfalls sollte die Zeitkonstante sehr viel kleiner sein, als die Zeit der Schaltvorgänge im Bussystem. Durch die Filterschaltung 15 werden Rückwirkungen der Impulse auf die Busankopplerschaltung 2 vermieden, die die Spannungsversorgung bewirkt.

Die Spannungsvervielfacherschaltung 16 in der Ausführung als Transformator hat den Vorteil, daß eine Potentialtrennung erfolgt. Auf der Sekundärseite des Transformators sorgt eine Schaltung 17 für die Verrundung der Impulse 8. Die Schaltung 17 besteht im wesentlichen aus einer Resonanzschaltung 18 und aus einer Freilaufdiode 19 zum Abschneiden der Rückschwingungen auf der Sekundärseite des Transformators.

Von der Schaltung 17 für die Verrundung der Impulse führen Verzweigungen zu vier Weichenschaltungen 9 für vier zu überwachende Elemente 6. Die Weichenschaltungen stehen einmal über die lange Leitung 5 mit einem gemeinsamen Rückleiter in Verbindung und zum anderen mit Optokopplern 10. Die als Transformator ausgeführte Spannungsvervielfacherschaltung 16 und die Optokoppler 10 bilden eine Potentialtrennebene 20. Jedes Element 6 kann als Stellvertretung für eine Reihenschaltung aus Elementen 6 verstanden werden.

Bei einer Spannungsvervielfachung auf 24 Volt auf der Sekundärseite der Spannungsvervielfacherschaltung 16 und bei den angegebenen Werten für die Impulserzeugung wird der Stromfluß über die Kontakte auf 6 mA begrenzt. Der zugeordnete Stromfluß hat zugleich die Aufgabe, die Leitungskapazität der langen Leitung 5, in der Größenordnung von 120 pF/m beim Öffnen der Kontakte möglichst rasch aufzuladen. Die durch die Leitungskapazität und den internen Widerstand der Stromquelle gebildete Zeitkonstante sollte im Vergleich zu Schaltverzögerungszeiten auf dem Bus 1 vernachlässigbar sein. Beim Schließen der Kontakte zu überwachender Elemente 6 wirkt vorteilhafterweise die Zeitverzögerung nur in vermindertem Ausmaß, da die Leitungskapazität über den relativ geringen Widerstand der Leitung schnell entladen wird. Ein neuer Schaltungszustand wird dadurch in kürzester Zeit angezeigt. Es fließt in einer langen Leitung 5 ein relativ hoher Anfangsstrom beim Entladen der langen Leitung, beispielsweise beim Schließen eines Schaltkontaktes eines zu überwachenden Sensors bzw. Elements 6. Mit offenem und geschlossenem Schaltzustand ist hierbei auch ein binärer Zustand des zu überwachenden Elements 6 gemeint. Hierunter werden sowohl Schaltkontakte als auch binäre Ausgänge zusammengefaßt. Ein hoher Anfangsstrom über die lange Leitung 5 kommt, wie schon eingangs dargelegt, einer Kontaktsicherheit zugute, da Oxydationsreste gewissermaßen abgebrannt werden.

Das Potential auf der langen Leitung 5 wird aufgebaut bei offenem Kontakt 6 des zu überwachenden Elements jeweils über den Widerstand R und das Ventil V 1 der Weichenschaltung 9. Der Spannungsfall über das Ventil V 1 ist weitaus geringer als die Summe aus Flußspannung der Diode V 2 der Weichenschaltung 9 und der Diode 21 des Optokopplers. Der Optokoppler spricht also noch nicht an; wodurch der nachgeschaltete Kondensator 22 entladen bleibt. Der Ausgang 23 eines Inverters 24 bleibt dadurch "high", also inaktiv. Werden, nachdem das Potential aufgebaut wurde, nun Kontakte zu überwachender Elemente 6 geschlossen, fließt bei längeren Leitungen in der Größenordnung ab 100 m ein relativ hoher Anfangsstrom, der der Kontaktsicherheit zugute kommt. Diese Ströme, die das Bussystem nicht belasten, brennen Oxydationsreste ab, so daß die Kontaktsicherheit gewährleistet bleibt.

Mit der geschilderten Verfahrensweise kann man mit energiearmem Impulsbetrieb und bei geringem Aufwand Leitungen bis zu 1000 m anschließen. Dennoch erübrigen sich stromtragfähige Treiberstufen. Anhand von FIG 2 orientiert, kann man sich jeweils anstelle eines zu überwachenden Elements 6 eine entsprechende Reihenschaltung zu überwachender Elemente vorstellen.

Die in FIG 2 wiedergegebenen Invertoren, 24 und die Invertoren im Impulsgenerator 7 und im Verstärkerteil 14, können insbesondere Chips auf einem Invertergatter sein, wie es auf dem Markt erhältlich ist.

## Patentansprüche

1. Verfahren zum energiearmen Abfragen von binären Zuständen über lange Leitungen (5) mittels einer Überwachungsschaltung (4) und Busankopplerschaltung (2) an Busleitungen (1) in Bussystemen zur Energie- und Informationsübertragung der Gebäudesystemtechnik, wobei mit energiearmen Impulsen einer Polarität jeweils eine lange Leitung (5) gegen Bezugspotential aufgeladen wird, solange ein angeschlossener Aktor bzw. Sensor (6) hohe Spannung bzw. Offenzustand aufweist, und wobei die Kapazität der langen Leitung (5) über den Aktor bzw. Sensor entladen wird, wenn dieser niedrige Spannung bzw. Schließzustand aufweist, wobei durch Optokoppler (10) jeweils zwischen einer langen Leitung (5) und einer Busankopplerschaltung (2) das Abfragen potentialfrei hinsichtlich der Busleitung (1) erfolgt,
**dadurch gekennzeichnet,**
daß die energiearmen Impulse auf die lange Leitung (5) gegeben werden, bis die Spannung bei Offenzustand auf der Leitung aufgebaut ist, worauf diese Spannung dem Optokoppler (10) in einer Weichenschaltung (9) als aktivierende Spannung als Meldeereignis für Offenzustand zugeführt wird und daß bei Spannungsabbau auf der langen Leitung (5) bei Schließzustand und bei abgebauter Spannung dem Optokoppler (10) mittels der Weichenschaltung (9) die aktivierende Spannung entzogen wird als Meldeereignis für Schließzustand, wobei die Impulse wieder auf die lange Leitung (5) gegeben werden.

2. Verfahren nach Anspruch 1,
**dadurch gekennzeichnet,**
daß die Spannung für die Energieversorgung auf eine höhere Spannung in der Größenordnung von 24 Volt oder darüber hinauftransformiert wird und daß aus dieser höheren Spannung die Impulse (8) für die Abfrage der Zustände von an den langen Leitungen angeschlossenen Aktoren bzw. Sensoren gewonnen werden.

3. Schaltungsanordnung zur Durchführung des Verfahrens nach Anspruch 1 oder 2,
**dadurch gekennzeichnet,**
daß ein Impulsgenerator (7) für energiearme Impulse zum Laden der Leitungskapazität einer langen Leitung (5) mit dieser über eine Weichenschaltung (9) verbunden ist, die bei einer bestimmten aufgebauten Spannung die Verbindung zur Leitung (5) sperrt und zu einem angeschlossenen Optokoppler (10) eine leitende Verbindung herstellt und diese aufrecht erhält, bis beim Unterschreiten der genannten Spannung die Weichenschaltung (9) die Verbindung zur Leitung (5) wieder leitend herstellt und die Verbindung zum Optokoppler (10) sperrt, wobei am Optokoppler (10) auf seiner anderen Potentialseite eine Anwenderschnittstelle (AST) einer Busankopplerschaltung (2) angeschlossen ist, wobei die Leitungskapazität in Verbindung mit einem Widerstand der Schaltungsanordnung eine Zeitkonstante ergibt, die im Vergleich zu Schaltverzögerungszeiten des Bussystems klein, möglichst vernachlässigbar klein, ist.

4. Schaltungsanordnung nach Anspruch 3,
**dadurch gekennzeichnet,**
daß im Strompfad zwischen Impulsgenerator (7) und langer Leitung (5) Schaltungsmittel zur Impulsverrundung angeordnet sind.

5. Schaltungsanordnung nach Anspruch 4,
**dadurch gekennzeichnet,**
daß als Schaltungsmittel zur Impulsverrundung RC-Glieder dienen.

6. Schaltungsanordnung nach Anspruch 4,
**dadurch gekennzeichnet,**
daß als Schaltungsmittel zur Impulsverrundung eine Resonanzschaltung (18) mit Freilaufdiode (19) zum Abschneiden der Rückschwingung dient.

7. Schaltungsanordnung nach Anspruch 6,
**dadurch gekennzeichnet**,
daß die Schaltungsmittel an der Sekundärseite einer Spannungsvervielfacherschaltung (16) zur Spannungsvervielfachung der vom Impulsgenerator (7) erzeugten Impulse (8) ausgebildet sind.

8. Schaltungsanordnung nach Anspruch 7,
**dadurch gekennzeichnet,**
daß die Spannungsvervielfacherschaltung (16) als Transformator ausgeführt ist.

## Claims

1. Method for the low-energy interrogation of binary states over long lines (5) by means of a monitoring circuit (4) and bus coupler circuit (2) on bus lines (1) in bus systems for transmitting energy and information in building systems engineering, a long line (5) being respectively charged with respect to reference potential by means of low-energy pulses of one polarity as long as a connected actuator or sensor (6) is at high voltage or is in the open state, and the capacitance of the long line (5) being discharged via the actuator or sensor when the latter is at low voltage or is in the closed state, it being the case that the interrogation is performed in an isolated fashion with respect to the bus line (1) by optocouplers (10) between a long line (5) and a bus coupler circuit (2) in each case, characterized in that the low-energy pulses are put onto the long line (5) until the voltage has built up on the line given the open state, whereupon this voltage is fed to the optocoupler (10) in a filter circuit (9) as activating voltage as signalling event for the open state, and in that in the case of a voltage reduction on the long line (5) given the closed state and with the voltage reduced the activating voltage is drawn from the optocoupler (10) by means of the filter circuit (9) as signalling event for the closed state, the pulses being put onto the long line (5) again.

2. Method according to Claim 1, characterized in that the voltage for the power supply is stepped up to a higher voltage of the order of magnitude of 24 volts or more, and in that the pulses (8) for the interrogation of the states of actuators or sensors connected to the long lines are obtained from this higher voltage.

3. Circuit arrangement for carrying out the method according to Claim 1 or 2, characterized in that a pulse generator (7) for low-energy pulses for charging the line capacitance of a long line (5) is connected to the latter via a filter circuit (9) which given a specific built-up voltage blocks the connection to the line (5) and establishes a conducting connection to a connected optocoupler (10) and maintains this connection until upon undershooting of the said voltage the filter circuit (9) re-establishes the conducting connection to the line (5) and blocks the connection to the optocoupler (10), a user interface (AST) of a bus coupler circuit (2) being connected to the optocoupler (10) on its other potential side, the line capacitance yielding in conjunction with a resistor of the circuit arrangement a time constant which is small, as far as possible negligibly small, by comparison with operating delays of the bus system.

4. Circuit arrangement according to Claim 3, characterized in that circuit means for pulse rounding are arranged in the current path between the pulse generator (7) and long line (5).

5. Circuit arrangement according to Claim 4, characterized in that RC elements serve as the circuit means for pulse rounding.

6. Circuit arrangement according to Claim 4, characterized in that a resonance circuit (18) having a freewheeling diode (19) for cutting off the ring-back serves as the circuit means for pulse rounding.

7. Circuit arrangement according to Claim 6, characterized in that the circuit means on the secondary side of a voltage multiplier connection (16) are designed for multiplying the voltage of the pulses (8) generated by the pulse generator (7).

8. Circuit arrangement according to Claim 7, characterized in that the voltage multiplier connection (16) is designed as a transformer.

## Revendications

1. Procédé pour connaître avec une faible consommation d'énergie, par l'intermédiaire de lignes (5) longues, des états binaires au moyen d'un circuit (4) de surveillance et d'un circuit (2) de raccordement de bus à des lignes (1) de bus dans des systèmes de bus pour la transmission d'énergie et d'information de la technique des systèmes de bâtiment. une ligne (5) longue étant chargée par rapport au potentiel de référence par des impulsions à faible énergie d'une polarité aussi longtemps qu'un actuateur ou capteur (6) raccordé présente une grande tension ou un état ouvert, et la capacité de la ligne (5) longue étant déchargée par l'intermédiaire de l'actuateur ou capteur si cet actuateur ou capteur présente une tension basse ou un état de fermeture, l'interrogation s'effectuant sans potentiel en ce qui concerne la ligne (1) de bus en raison de coupleurs (10) optoélectroniques situés entre chaque ligne (5) longue et chaque circuit (2) de raccordement de bus, caractérisé en ce que les impulsions à faible énergie sont envoyées sur la ligne (5) longue jusqu'à ce que la tension pour un état ouvert soit établie sur la ligne, cette tension étant ensuite envoyée comme tension d'activation servant d'événements indicateurs d'un état ouvert au coupleur (10) optoélectronique situé dans un circuit (9) de dérivation, et en ce que, lorsque la tension sur la ligne (5) longue s'effondre en cas d'état de fermeture et lorsque la tension s'est effondrée, la tension d'activation est, au moyen du circuit (9) de dérivation, prélevée du coupleur (10) optoélectronique comme événement d'indication d'un état de fermeture, les impulsions étant à nouveau envoyées sur la ligne (5) longue.

2. Procédé suivant la revendication 1, caractérisé en ce que la tension pour l'alimentation en énergie est survoltée par transformation à une tension supérieure de l'ordre de grandeur de 24 V ou plus et en ce que les impulsions (8) pour l'interrogation des états d'actuateur ou capteur raccordés aux lignes longues sont obtenues à partir de cette tension supérieure

3. Montage pour la mise en oeuvre du procédé suivant la revendication 1 ou 2, caractérisé en ce qu'un générateur (7) d'impulsions pour des impulsions à faible énergie est, pour charger la capacité de ligne d'une ligne (5) longue, relié à cette ligne par l'intermédiaire d'un circuit (9) de dérivation qui, à une tension déterminée établie. bloque la liaison avec la ligne (5) et produit une liaison conductrice avec un coupleur (10) optoélectronique raccordé et maintient cette liaison jusqu'à ce que. au cas où l'on est en-dessous de ladite tension, le circuit (9) de dérivation rendent à nouveau passante la liaison à la ligne (5) et bloquent la liaison au coupleur (10) optoélectronique, un interface (AST) utilisateur d'un circuit (2) de raccordement de bus étant raccordé au coupleur (10) optoélectronique, de son autre côté de potentiel, la capacité de lignes donnant, en liaison avec une résistance du montage, une constante de temps qui est petite, autant que possible assez petite pour être négligée, par rapport aux durées de retardement de connexion du système de bus.

4. Montage suivant la revendication 3, caractérisé en ce qu'il est monté dans la voie de courant entre le générateur (7) d'impulsions et la ligne (5) longue des moyens de circuit pour arrondir les impulsions.

5. Montage suivant la revendication 4, caractérisé en ce que l'on utilise comme moyen de circuit pour arrondir les impulsions des éléments RC.

6. Montage suivant la revendication 4, caractérisé en ce que l'on utilise comme moyen de circuit pour arrondir les impulsions un circuit (18) de résonance à diode (19) de roue libre pour supprimer l'oscillation en réaction.

7. Montage suivant la revendication 6. caractérisé en ce que les moyens de circuit sont réalisés sur la face secondaire d'un circuit (16) de multiplication de tension servant à multiplier la tension des impulsions (8) produites par le générateur (7) d'impulsions.

8. Montage suivant la revendication 7, caractérisé en ce que le circuit (16) de multiplication de tension est réalisé en transformateur.
